# DEMANDE DE BREVET EUROPEEN

(11) **EP 0 677 757 A1**
(43) Date de publication de la demande: **18.10.1995**
(21) Numéro de dépôt: 95400786.0
(22) Date de dépôt: 07.04.1995
(51) Int. Cl.: G02B 6/38, G02B 6/42, H01R 31/06

(54) **Prise adaptable pour précâblage banalisé, pour système de communication**

(30) Priorité: 15.04.1994 FR 9404532
(71) Demandeur: Nozick, Jacques, F-75005 Paris (FR)
(72) Inventeur: Nozick, Jacques, F-75005 Paris (FR)
(74) Mandataire: Pinguet, André

(57) **Abrégé**

Prise adaptable pour précâblage banalisé, pour système de communication, caractérisée en ce qu'elle comporte les éléments modulaires suivants : un plastron (1), un connecteur (2) et une carte (3) de circuit imprimé munie de contacts (4) pour recevoir des paires (6) de conducteurs, optionnellement un capot de protection (5), opposé au plastron (1), et avantageusement un transducteur optique-électronique (7) fixé sur la carte (3), ladite prise comportant un connecteur à fibre optique, ledit transducteur (7) étant téléalimenté par une desdites paires (6) de conducteurs.

## Description

La présente invention concerne une prise pour précâblage banalisé, pour système de communication (images, voix, données), et plus particulièrement une prise permettant de transmettre des signaux par voie optique.

La fibre optique en elle-même ne coûte pas chère et présente des capacités de transmission considérables. Par contre, ce qui est est un frein à son développement dans les sites industriels ou tertiaires, c'est la difficulté de lui raccorder des équipements (informatiques, vidéo, téléphoniques) ne disposant que de connexions électriques.

La conversion électrique → optique ou optique → électrique est aujourd'hui le maillon le plus coûteux de la chaîne de liaison.

La présente invention a pour objet une prise pour précâblage banalisé permettant l'incorporation de la conversion optique → électronique, avec la possibilité d'adaptation à tous les protocoles de communications et réseaux tels que Token Ring, Ethernet, TP-PMD, etc..

Un autre objet de l'invention est la téléalimentation d'une prise mixte électronique optique par un câble mixte comportant des paires de conducteurs, généralement quatre paires, et des fibres optiques, généralement deux.

La présente invention a aussi pour objet de permettre de changer de protocole sans intervention sur le précâblage et de permettre de se connecter en direct sur les paires disponibles.

Ces objets, ainsi que d'autres, sont réalisés conformément à la présente invention par une prise adaptable pour précâblage banalisé, pour système de communication, caractérisée en ce qu'elle comporte les éléments modulaires suivants : un plastron, un connecteur et une carte de circuit imprimé munie de contacts pour recevoir des paires de conducteurs, optionnellement un capot de protection, opposé au plastron.

Une telle prise est modulaire. Les éléments peuvent rester démontables, ou être associés de façon définitive, si on le désire. En particulier, le connecteur qui peut être du type RJ45 peut être muni de broches en appui élastique contre la carte, la carte étant fixée, notamment par encliquetage, sur le plastron, ce qui permet ainsi de maintenir le connecteur en place.

Grâce à cette disposition, l'invention permet de fixer sur la carte un transducteur optique-électronique. La prise est alors munie du connecteur à fibre optique. Selon une caractéristique de la présente invention, le transducteur est téléalimenté par une desdites paires de conducteurs.

Afin d'adapter les signaux optiques convertis aux protocoles des réseaux, il est prévu, conformément à la présente invention de fixer sur la prise, un adaptateur branché sur le connecteur de la prise, l'adaptateur présentant lui-même au moins deux connecteurs : par exemple, un connecteur pour les signaux provenant des paires et au moins un connecteur pour les signaux provenant des fibres optiques. Afin de conserver le maximum de paires pour la communication, l'alimentation de l'adaptateur à partir de la prise, peut être réalisée par les moyens de fixation de l'adaptateur sur la prise, moyens qui peuvent être par exemple deux vis métalliques.

D'autres caractéristiques et avantages de l'invention apparaîtront au cours de la description qui va suivre, donnée à titre d'exemple non limitatif, en regard des dessins ci-joints, et qui fera bien comprendre comment l'invention peut être réalisée.

Sur les dessins :
- la figure 1 est une vue en partie en coupe, en partie en perspective d'une prise selon l'invention, les éléments étant écartés les uns des autres pour montrer plus clairement la composition et l'aspect modulaire de la prise selon l'invention,
- la figure 2 est une vue en élévation de l'arrière, vu à partir de la droite du dessin, de la prise de la figure 1, à l'état assemblé, avec en trait interrompu, la représentation d'un transducteur, disposé à l'intérieur,
- la figure 3 est une vue en élévation de côté d'une prise selon l'invention, en regard d'un adaptateur de formation des signaux optoélectriques à un protocole, et
- la figure 4 est une vue en bout, à partir de la droite de la figure, de l'adaptateur de la figure 3.

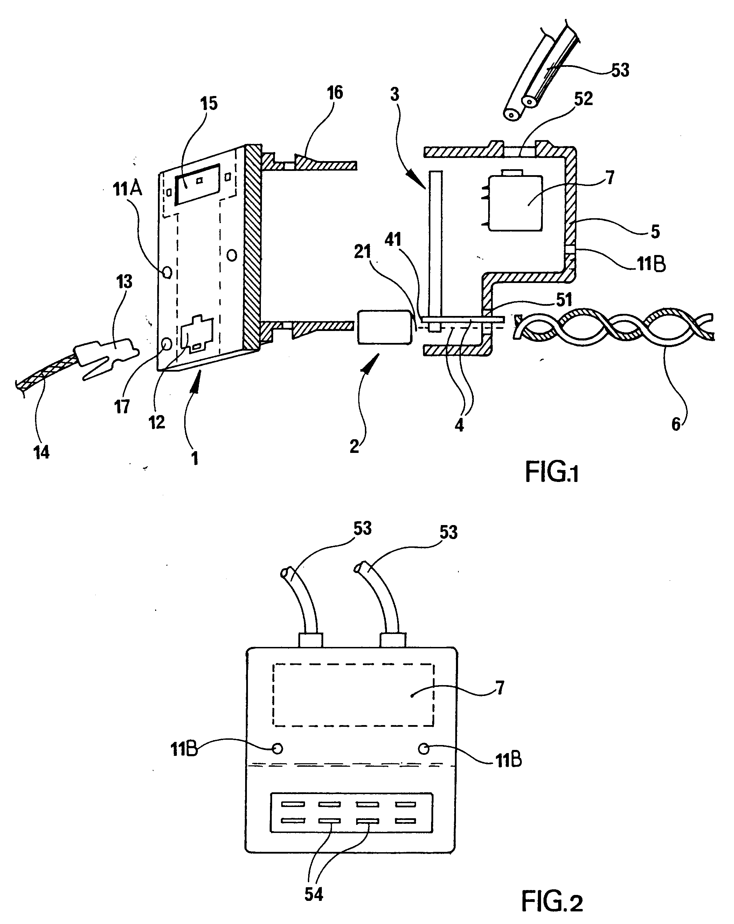

Dans l'exemple représenté, sur les figures 1 et 2, la prise selon l'invention comprend essentiellement un plastron 1, un connecteur 2, une carte 3 de circuit imprimé, munie de contacts 4, et, éventuellement un capot de protection 5. La prise peut être placée sur des supports tels par exemple une plinthe, un rack, une armoire, et selon les cas le capot peut être utile ou non. Le plastron 1 permet la fixation sur le support, grâce à des crans d'encliquetage ou des trous 11A, dont l'intérieur peut être garni d'une douille métallique filetée. La face avant du plastron comporte une ouverture 12, éventuellement obturable par un volet coulissant, pour recevoir la fiche d'extrémité 13 d'un câble 14, et comporte aussi avantageusement, un porte-étiquette 15. La face arrière du plastron comporte des moyens d'encliquetage élastique 16 pour fixer la prise et éventuellement les divers éléments logés derrière le plastron.

Un connecteur 2 est disposé derrière le plastron, en regard de l'ouverture 12, pour coopérer avec la fiche 13 du câble. Ce connecteur peut être par exemple du type normalisé RJ45. Une particularité importante de la présente invention est la présence d'une carte 3 de circuit imprimé, qui confère à la prise des possibilités d'adaptation nombreuses. La prise comporte des contacts 4, sur lesquels sont connectées des paires 6 de conducteurs de communication. Selon une caractéristique de la présente invention, les contacts, qui peuvent avantageusement être du type autodénudant sont montés sur la carte 3, et les broches 21 de raccordement du connecteur 2 peuvent venir en appui élastique sur des contacts de la carte, qui peuvent être les extrémités 41 des contacts 4. La carte 3 peut être fixée par encliquetage sur le plastron, et assurer le maintien en position du connecteur 2, qui peut aussi être fixé de façon classique.

Cette structure permet de nombreuses possibilités d'adaptation de la prise, et en particulier, permet d'incorporer des moyens de connexion de fibre optique. En particulier, le capot 5 a été représenté avec une forme, délimitant un volume intérieur permettant de recevoir un transducteur optique 7, tel qu'un convertisseur à arséniure de gallium. Ce transducteur transforme en signaux électriques les signaux optiques reçus par les câbles optiques 53. Le transducteur peut être téléalimenté par une des paires 6. On peut prévoir un signal lumineux de contrôle, par exemple une LED 17, validant l'alimentation électrique. Le capot est formé avec une ouverture 51 pour le passage vers l'extérieur de contacts 4, et une ou plusieurs ouvertures 52 pour le passage chacun d'un câble à fibre optique 53. Le capot peut être fixé par encliquetage ou au moyen de vis passant dans des trous 11B alignés sur les trous 11A du plastron. Le transducteur 7 peut être fixé sur la carte 3, qui comporte des composants pour transmettre les signaux électriques délivrés par le transducteur et pour transmettre au transducteur l'alimentation reçue sur certains contacts 4.

Les entrées des câbles optiques sont placées sur le dessus. Elles pourraient être à un autre endroit, par exemple sur la face arrière. Les entrées optiques et électroniques ont été représentées comme étant distinctes. Il est possible de prévoir une seule entrée, pour un câble mixte, comportant par exemple quatre paires électroniques et deux fibres optiques. A titre d'exemple, le connecteur 2, du type RJ45 peut comporter huit broches de sortie, dont quatre correspondent à deux paires d'entrée 6 (une autre paire est utilisée pour l'alimentation 5V du transducteur, et une autre paire n'est pas utilisée). Les autres broches restantes du connecteur 2 sont utilisées pour les sorties des signaux électroniques provenant du transducteur 7 et correspondant aux signaux optiques.

Les signaux data transmis par les paires 6 étant généralement traités en protocoles ou en réseaux, les signaux électroniques convertis à partir de l'optique ne sont généralement pas utilisables directement à la sortie du connecteur 2, pour être transmis par le câble 14.

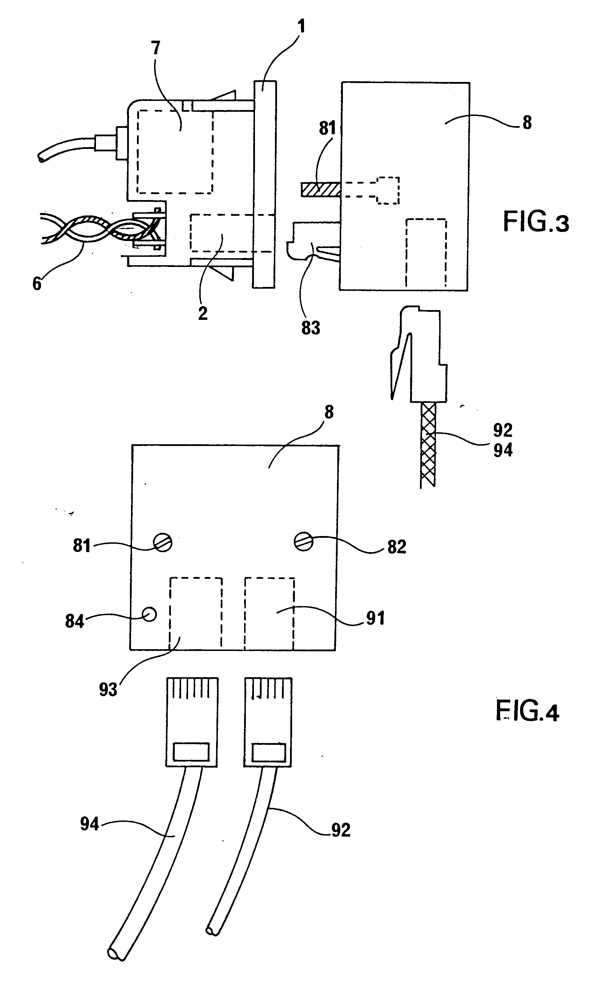

Conformément à une caractéristique de la présente invention, un boîtier 8 d'adaptation de protocoles électriques désigné ci-après adaptateur est associé à la prise telle que décrite ci-dessus. Un tel ensemble est représenté en élévation sur la figure 3, et en bout à partir de la droite sur la figure 4.

L'adaptateur peut être fixé à la prise au moyen de deux vis 81, 82 vissées dans les trous 11A du plastron 1 de la prise contre lequel le plastron est appliqué. L'adaptateur est muni d'une fiche 83 qui est prévue pour s'enfoncer par l'ouverture 12 du plastron, dans le connecteur de la prise. Avec des connecteurs normalisés munis de huit broches, quatre broches transmettent les signaux data électroniques et quatre broches transmettent les signaux optoélectriques. Pour éviter de réduire le nombre de broches utile à la transmission de signaux, l'alimentation de l'adaptateur en 5V peut être réalisée par les deux vis 81, 82. L'adaptateur comporte avantageusement un LED 84 de validation de l'alimentation. On peut avantageusement prévoir au moins deux connecteurs (RJ45) sur le boîtier 8 : un connecteur 91, pour la transmission des signaux data électroniques pour la connexion directe d'un équipement sur un réseau véhiculé par les paires, recevant un câble deux paires 92, et au moins un connecteur 93, recevant un câble deux paires 94 pour la connexion indirecte d'un équipement sur l'adaptateur via les fibres optiques.

Le réseau véhiculé par les paires ne fait que traverser l'adaptateur, tandis que les signaux optoélectriques, sont formatés à un protocole par l'adaptateur. La prise est ainsi banalisée car elle peut supporter n'importe quelle application du fait de l'adaptateur, prévu et conçu en fonction du protocole ou besoin spécifique du réseau.

## Revendications

**1.-** Prise adaptable pour précâblage banalisé, pour système de communication, caractérisée en ce qu'elle comporte les éléments modulaires suivants : un plastron (1), un connecteur (2) et une carte (3) de circuit imprimé munie de contacts (4) pour recevoir des paires (6) de conducteurs, optionnellement un capot de protection (5), opposé au plastron (1).

**2.-** Prise selon la revendication 1, dans laquelle le connecteur (2) est muni de broches (21) en appui élastique contre la carte (3), la carte (3) étant fixée, notamment par encliquetage, sur le plastron (1), et maintenant ainsi le connecteur (2) en place.

**3.-** Prise selon une des revendications 1 ou 2, caractérisée en ce qu'un transducteur optique-électronique (7) est fixé sur la carte (3), ladite prise comportant un connecteur à fibre optique, ledit transducteur (7) étant téléalimenté par une desdites paires (6) de conducteurs.

**4.-** Prise selon la revendication 3, comportant en outre un adaptateur (8) branché sur le connecteur de la prise et fixé à la prise par deux éléments tels que des vis métalliques (81), ledit adaptateur comportant des moyens pour traiter les signaux électriques reçus de la prise et comportant lui-même au moins un autre connecteur (91, 93) et étant alimenté en courant continu basse tension à partir de la prise par lesdites deux vis de fixation sur la prise.

**5.-** Prise selon la revendication 4, dans laquelle l'adaptateur (8) comporte au moins deux connecteurs (91, 93), un pour les signaux reçus par les contacts (4) et au moins un pour les signaux reçus par le connecteur à fibre optique.

**6.-** Ensemble comportant une prise selon une des revendications 3 à 5 et un câble mixte optique et galvanique comportant la téléalimentation du transducteur (7), le cas échéant de l'adaptateur (8), à partir d'un répartiteur.

**7.-** Prise selon l'une des revendications 1 à 5, dans laquelle le connecteur (2) est du type RJ45.

**8.-** Prise selon l'une des revendications 1 à 5, dans laquelle les contacts (4) sont du type autodénudant.
